(19) Europäisches Patentamt
European Patent Office
Office européen des brevets

(11) **EP 3 343 516 A1**

(12) **EUROPEAN PATENT APPLICATION**

(43) Date of publication:
**04.07.2018 Bulletin 2018/27**

(51) Int Cl.:
**G06T 19/00** $^{(2011.01)}$          **G06T 15/04** $^{(2011.01)}$
**G06T 19/20** $^{(2011.01)}$

(21) Application number: **17305003.0**

(22) Date of filing: **03.01.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **Fradet, Matthieu**
  **35576 Cesson Sévigné Cedex (FR)**
• **Robert, Philippe**
  **35576 Cesson Sévigné Cedex (FR)**
• **Servant, Fabien**
  **35576 Cesson Sévigné Cedex (FR)**

(74) Representative: **Merlet, Hugues**
**TECHNICOLOR**
**1-5, rue Jeanne d'Arc**
**92130 Issy-les-Moulineaux (FR)**

(54) **METHOD AND DEVICE FOR APPLYING AN EFFECT OF AN AUGMENTED OR MIXED REALITY APPLICATION**

(57)    A method for applying an effect of augmented or mixed reality, the effect having an impact on at least one part of a real-world 3D scene, the method comprising, for each of at least two images of the scene: acquiring the image according to a camera pose; for at least one 3D point of the scene, a processing (80-84) (either determining and storing texture and confidence information associated with the 3D point, if the 3D point is visible in the image and not already associated with stored infor- mation, or aforesaid determining/storing and updating the stored information based on a comparison between determined and stored confidence information, if the 3D point is visible in the image and already associated with stored information); modifying (85-810) at least one effect parameter, based on the stored information associated to each 3D point of the at least one impacted part of the scene.

Figure 8

## Description

### 1. TECHNICAL FIELD

The field of the disclosure is that of Augmented Reality (AR) and Mixed Reality (MR). More specifically, the present invention relates to a solution (method and device) for applying an effect of an augmented or mixed reality application (also referred to as "altered reality"), this effect having an impact on at least one part of a real-world 3D scene (also referred to as "real-world environment").

### 2. TECHNOLOGICAL BACKGROUND

Augmented Reality (AR) applications refer to a live view of a real-world 3D scene (also referred to as "real-world environment") whose elements are augmented by virtual objects (i.e. computer-generated (CG) contents), such as video or graphics.

In standard Augmented Reality (AR) applications, virtual object layers are simply superimposed onto real world environment. Mixed Reality (MR) applications go further by blending seamlessly real and virtual worlds and allowing physical and digital entities interacting together.

Among possible interactions we may for example think to occlusions management, casting of virtual shadows onto real objects, but also collisions, bouncing, geometric deformations, appearance changes... User interactions should also be taken into account, e.g. color change of an object when the user selects it. The final aim is always to improve the realism and the user experience.

In the present disclosure, we focus on the family of effects which lead to the disocclusion of regions of real objects in a given image (also referred to as "frame"), i.e. the situation where an occluded region of an object becomes visible once the effect is applied. For example, the user selects a real object in the scene and virtually moves it. At its initial position, this object occludes a certain region of "background". When moving this object, a realistic rendering requires the reconstruction of the texture of this dis-occluded background region. In other examples, a virtual character inserted into the scene pushes a real object, virtual projectiles hit a real object which is ejected, magic powder is poured onto a real object which is found miniaturized or semi-transparent, etc.

As said, all these effects require texture reconstruction, also called "inpainting". The size of the regions to be reconstructed directly depends on the type of the applied effect and its eventual parameters (reduction scale, displacement parameters...).

State of the art methods include "temporal filling" and "spatial inpainting". The idea of "temporal filling" is to benefit from the motion of the camera and/or the motion of the different video objects. Thanks to these motions, it is likely that the area hidden in frame t was visible in a past frame. Motion estimation and image registration allow to recover the missing information. However it may happen that the information has never been visible (e.g. if there was no motion, the area hidden in the frame t has always been hidden in the past). Hence there is no other choice than to invent/draw the missing information from surrounding visible regions. This is called "spatial inpainting" whose idea is to diffuse known intensities inside the hole and/or to synthesize texture.

For both "temporal filling" and "spatial inpainting", automatic approaches may lead in highly undesired results, while semi-automatic or manual approaches are extremely time consuming and excluded in an automatic real-time case anyway.

There is a need for an automatic solution to assure the good reconstruction of the dis-occluded textures to be rendered, i.e. a solution allowing to decide which effects could be rendered at a given instant and with which parameters in a way to keep a good tradeoff between the user experience and the rendering quality.

### 3. SUMMARY

A particular aspect of the present disclosure relates to a method for applying an effect of augmented or mixed reality, said effect having an impact on at least one part of a real-world 3D scene. The method comprises, for each image of a set of at least two images of said scene:

- acquiring said image according to a camera pose;
- for at least one 3D point of said real-world 3D scene:

   o if said 3D point is visible in said image and if said 3D point is not already associated with stored information:

      ▪ determining a texture information associated with said 3D point, based on said image;
      ▪ determining a confidence information associated with said texture information, based on said camera pose;
      ▪ storing said texture information and said confidence information, as stored information associated with said 3D point;

   o if said 3D point is visible in said image and if said 3D point is already associated with stored information:

      ▪ determining a texture information associated with said 3D point, based on said image;
      ▪ determining a confidence information associated with said texture information, based on said camera pose;
      ▪ comparing said confidence information with a stored confidence information associated with said 3D point;
- updating the stored confidence information and a stored texture information associated with said 3D point, based on a result of said comparing;

- modifying at least one parameter of said effect, based on the stored information associated to each 3D point of said at least one impacted part of said scene.

The general principle of the proposed solution is to generate, store and use confidence information (associated with texture information) to automatically tune at least one parameter (e.g. reduction scale, amplitude and/or direction of translation, etc.) of an effect to be applied by an augmented or mixed reality application (also referred to as "altered reality"). This allows to analyze in real-time the real textures seen since the start of the augmented or mixed application and to decide which effect(s) could be rendered at a given instant and with which parameter(s) in a way to keep a good tradeoff between the user experience and the rendering quality.

According to a particular feature, said modifying at least one parameter of said effect comprises:

a) determining a new geometry of the scene as if said effect was rendered with a first value of said at least one parameter of said effect;
b) deciding on an applicability of said effect with said first value of said at least one parameter, based on stored confidence information associated to the 3D points of said at least one impacted part in the new geometry of the scene; and
c) if said effect is not applicable with said first value of said at least one parameter, executing again steps a) and b) with another value of said at least one parameter of said effect.

Thus the stored confidence information associated with the relevant 3D points allow to test several values of the at least one parameter before choosing the right one.

According to a particular feature, said other value of said at least one parameter of said effect is determined from a list of values ordered by decreasing preference and browsed linearly or by dichotomy.

Thus we optimize the processing time for the test of several values of the at least one parameter.

According to a particular feature, the method comprises, for a given image of said set of at least two images of said scene, if said effect has not to be applied:

- making said effect, with said modified at least one parameter of said effect, available through a user interface.

This allows an adaptation of an effect (or a list of effects) made available to a user through a user interface, e.g. a GUI (Graphical User Interface). For example, in the case of a gaming application, the proposed solution allows to adapt the game user interface to make available at the current instant only the effect(s) that will lead to an acceptable quality of rendering.

According to a particular feature, the method comprises, for a given image of said set of at least two images of said scene, if said effect has to be applied:

- determining a new geometry of the scene with said effect applied with said modified at least one parameter of said effect; and
- rendering said given image, based on the stored texture information associated to the 3D points of said at least one impacted part in the new geometry of the scene.

Thus the stored texture information, associated with stored confidence information, are used for the rendering of the image with the effect applied with the modified at least one parameter.

According to a particular feature, said rendering of said image comprises:

- for at least one 3D point of said at least one impacted part, in the new geometry of the scene, not associated with a stored confidence information or associated with a stored confidence information corresponding to a value below a determined threshold:

  * reconstructing a texture information for said 3D point, by a spatial inpainting;
  * storing the reconstructed texture information with a confidence information having a value greater or equal to said threshold; and
  * using said reconstructed texture information for said rendering of said image.

Thus the proposed solution can be implemented even though some 3D points of the real-world 3D scene are not yet associated with a stored confidence information, or are associated with a stored confidence information corresponding to a value below a determined threshold. The inpainted regions corresponding to these 3D points can be reused later to render the subsequent images (frames), which insures the spatio-temporal consistency of the reconstruction, while not preventing a further refinement of the stored texture information (forming texture map(s)) and a further update of the stored confidence information (forming confidence map(s)).

According to a particular feature, said confidence information is function of a first component $c_1$ defined as inversely proportional to a distance between said 3D point of the scene and a 3D point representing a camera location.

This first component reflects the fact that more the camera is close to the 3D point of the real-world 3D scene (i.e. the closer we observe an object), the better. In other words, more the camera is close to the 3D point of the real-world 3D scene, more the value of the confidence information associated with this 3D point increases.

According to a particular feature, said confidence information is function of a second component $c_2$ defined as proportional to the cosine of an angle of incidence between:

- a normal vector N of a facet which said 3D point of the scene belongs to, and
- a vector -C going from said 3D point of the scene to said 3D point representing a camera location.

This second component reflects the fact that the more fronto-parallel we observe an object, the better (the less perspective distortions).

According to a particular feature, said confidence information is function of a third component $c_3$ defined as proportional to the cosine of an angle between:

- an inverse of said vector -C, and
- a reflected vector R, defined from an incident vector L, going from a 3D point representing a main light source location to said 3D point of the scene, and from said normal vector N.

This allows to avoid or reduce specularities.

According to a particular feature, said confidence information is function of a fourth component $c_4$ defined as a first additional constant if a shadow removal algorithm is applied.

According to a particular feature, said confidence information is function of a fifth component $c_5$ defined as a second additional constant if a specularity removal algorithm is applied.

According to a particular feature, said confidence information is a weighted sum of at least two of said first, second, third, fourth and fifth components.

Another aspect of the present disclosure relates to a computer program product comprising program code instructions for implementing the above-mentioned method (for applying an effect of augmented or mixed reality), in any of its different embodiments, when said program is executed on a computer or a processor.

Another aspect of the present disclosure relates to a non-transitory computer-readable carrier medium, storing the aforesaid computer program product.

Another aspect of the present disclosure relates to a device for applying an effect of augmented or mixed reality, said effect having an impact on at least one part of a real-world 3D scene, said device comprising a computation machine configured to, for each image of a set of at least two images of said scene:

- acquire said image according to a camera pose;
- for at least one 3D point of said real-world 3D scene:

◦ if said 3D point is visible in said image and if said 3D point is not already associated with stored information:

▪ determine a texture information associated with said 3D point, based on said image;
▪ determine a confidence information associated with said texture information, based on said camera pose;
▪ store said texture information and said confidence information, as stored information associated with said 3D point;

◦ if said 3D point is visible in said image and if said 3D point is already associated with stored information:

▪ determine a texture information associated with said 3D point, based on said image;
▪ determine a confidence information associated with said texture information, based on said camera pose;
▪ compare said confidence information with a stored confidence information associated with said 3D point;
▪ update the stored confidence information and a stored texture information associated with said 3D point, based on a result of said comparing;

- modify at least one parameter of said effect, based on the stored information associated to each 3D point of said at least one impacted part of said scene.

According to a particular feature of the device, said computation machine is further configured to execute a method (for applying an effect) compliant with any of the above-mentioned embodiments.

The device can be implemented in an apparatus chosen e.g. among a mobile phone, a tablet and a head-mounted display.

Another aspect of the present disclosure relates to a device for applying an effect of augmented or mixed reality, said effect having an impact on at least one part of a real-world 3D scene, said device comprising processing means configured to, for each image of a set of at least two images of said scene:

- acquire said image according to a camera pose;
- for at least one 3D point of said real-world 3D scene:

◦ if said 3D point is visible in said image and if said 3D point is not already associated with stored information:

▪ determine a texture information associated with said 3D point, based on said image;
∙ determine a confidence information associated with said texture information, based on said camera pose;
∙ store said texture information and said confidence information, as stored information associated with said 3D point;

∘ if said 3D point is visible in said image and if said 3D point is already associated with stored information:

∙ determine a texture information associated with said 3D point, based on said image;
∙ determine a confidence information associated with said texture information, based on said camera pose;
∙ compare said confidence information with a stored confidence information associated with said 3D point;
∙ update the stored confidence information and a stored texture information associated with said 3D point, based on a result of said comparing;

- modify at least one parameter of said effect, based on the stored information associated to each 3D point of said at least one impacted part of said scene.

The device is advantageously configured for carrying out any execution mode of the method above for applying an effect.

## 4. LIST OF FIGURES

Other features and advantages of embodiments shall appear from the following description, given by way of indicative and non-exhaustive examples and from the appended drawings, of which:

- Figure 1 shows an example of a real-world 3D scene;
- Figure 2 is an example of input video frame at instant t;
- Figure 3 shows a 2D label map $S_1$ for the frame of figure 2, with effect not applied;
- Figure 4 shows a 2D label map $S_2$ for the frame of figure 2, with effect applied;
- Figure 5 shows regions with dots which are to be rendered if the effect has to be applied;
- Figure 6 shows a first part of the regions with dots of figure 5, corresponding to regions of wall and table that appear when the box is virtually reduced, and which are to be rendered if the effect has to be applied;
- Figure 7 shows a second part of the regions with dots of figure 5 corresponding to regions of the virtually reduced box, which are to be rendered again if the effect has to be applied;
- Figure 8 is a flowchart of a first particular embodiment of the proposed method, for the processing of a new input video frame, in the case the effect parameters are not fixed yet;
- Figure 9 is a flowchart of a second particular embodiment of the proposed method, for the processing of a new input video frame, in the case the effect parameters are already fixed and effect has to be applied;
- Figure 10 is a flowchart of a third particular embodiment of the proposed method, for the processing of a new input video frame, in the case of rendering a pre-scenarized animation;
- Figure 11 is a flowchart of a fourth particular embodiment of the proposed method, for the processing of a new input video frame, in the case of a gaming application;
- Figure 12 illustrates a camera, a light source and an object, along with corresponding vectors $N$, $C$, $R$ and $L$; and
- Figure 13 shows the simplified structure of a device according to a particular embodiment.

## 5. DETAILED DESCRIPTION

In all of the figures of the present document, similar elements and steps are designated by the same numerical reference sign.
In the following description, we assume that the real-world 3D scene is static and its 3D geometry (e.g. segmented 3D mesh or 3D point cloud) is known. This can be done by scanning the scene in a pre-processing step, for example using a device that embeds a depth sensor (e.g. Kinect™, Google Tango™ or Intel R200™) or with a 3D modeling tool.
In a particular implementation, we also assume that the model of the real-world 3D scene is not textured, which remains a reasonable assumption if you consider that illumination conditions may change between scanning and run time and that different devices (with sensors with their own quality) may be use for scanning and run time.
However, in an alternative implementation, the model of the real-world 3D scene is partially textured: for example, we know a priori and reliably the complete texture model of at least one of the objects contained in the real scene. In this case, no need to process the 3D points of this object (no need to build and refresh a texture map nor a confidence map for this object).
We also assume that the camera pose (i.e. position and orientation) is estimated in real time. This can be done for example using marker detection (e.g. ArUco™ or Vuforia™). For a segmented 3D mesh, surface parametrization methods allow to find a one-to-one mapping from a 3D triangulated surface mesh to a suitable 2D domain. See for example, methods from CGAL (Computational Geometry Algorithms Library) for planar parameterization of triangulated surface meshes.

In a particular implementation, described below, the proposed method (for applying an effect of an augmented or mixed reality application) is carried out by a user device (e.g. a smartphone, a tablet or a head-mounted display). In an alternative implementation, the method is carried out by a computing device external to the user device. In the latter case, the results of the whole computation is transmitted by the computing device to the user device.

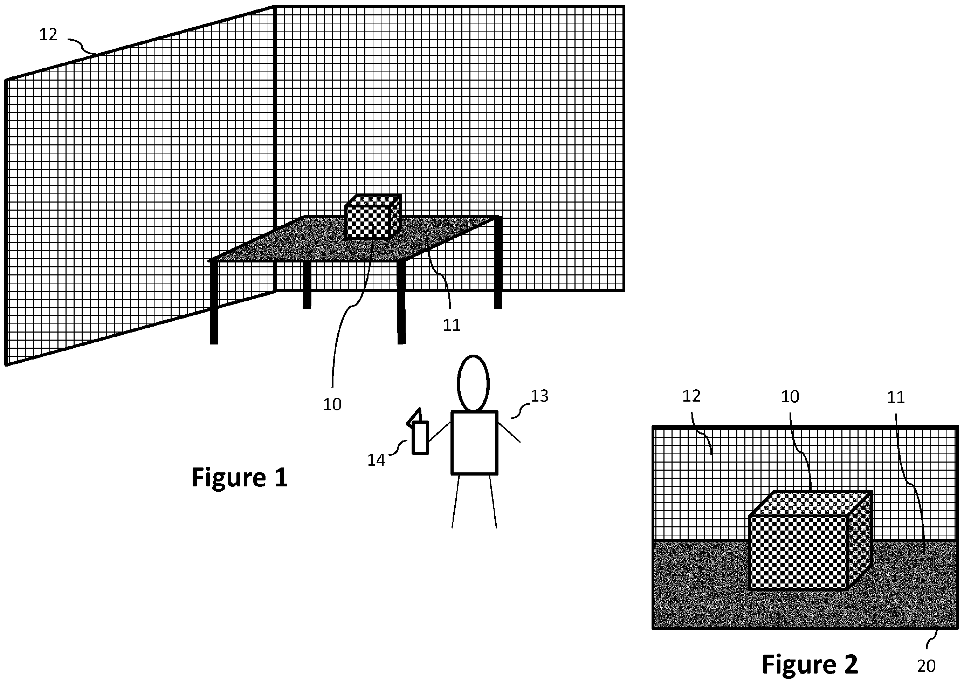

In the following description, we consider the example of real-world 3D scene shown in **figure 1**. The scene is observed by a camera of a user device 14. The scene comprises a real box 10 on a real table 11 close to real walls 12 in a real room. **Figure 2** is an example of an input video frame 20 obtained with the camera of the user device 14 at an instant t, and in which appear the real box 10, the real table 11 and the real walls 12.

### Summary of a particular embodiment

For each new frame, given the estimated camera pose and the 3D geometry of the scene, we are able to project each 3D point to a pixel of the video frame. So we use the texture elements of the video frame to construct and refine an unwrapped texture map of each object (using the uv texture coordinates of the 3D point) or to directly texture the 3D point cloud.

In parallel a confidence map is constructed and updated for each object (or a confidence point cloud) in which each pixel (or each point of the point cloud) is assigned to a confidence value between 0 (for points never seen) and 1 (for points seen in perfect conditions: fronto-parallel, good lighting and high resolution).

The refinement or update of the texture and the confidence values allows to erase texture values of bad quality, that have been seen in a past frame under bad conditions, by texture values of better quality, that are seen in the current frame under better conditions.

This confidence map is continuously analyzed by the system to detect which regions occluded in the current frame could be potentially well reconstructed if required by the application of an effect. A pixel is considered as well reconstructed if its confidence value is above a given threshold. In a particular implementation, the threshold can be tuned by the user, depending on the desired experience (from many effects with possible low rendering quality, to a reduced number of effects but with a higher quality). From this region detection step, the system then enables or disables the effects and sets their parameters (e.g. magnitude of the displacements, scale of miniaturization ...).

### Examples of use cases

For example, we distinguish two use cases:

- Adaptation of a pre-computed scenario:

  This first use case is the rendering of a pre-scenarized animation. For example, the system knows that at a given instant, the rendering engine should render some magic powder that is poured onto a real object, which launches the miniaturization of the real object. Our system allows to compute automatically the scale factor that will provide the best rendering quality depending on which regions of the background have been seen from the start of the application to the current instant.

- Adaptation of a list of available effects:

  This second use case is related to gaming applications. For example, the system a priori knows that a given list of effects may be applied to a given real object. Depending on the automatic analysis of the background regions that have been seen from the start of the application to the current instant, the system adapts the game user interface to make available at the current instant only the effects that will lead to an acceptable quality of rendering.

### Detailed description of particular embodiments

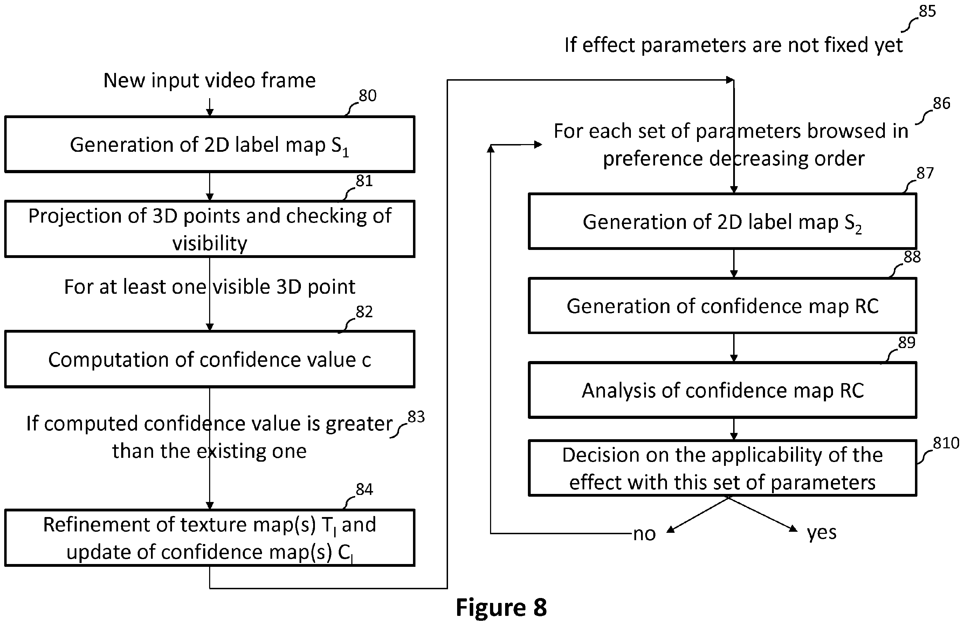

**Figure 8** is a flowchart of a first particular embodiment of the proposed method, for the processing of a new input video frame, in the case the effect parameters are not fixed yet.

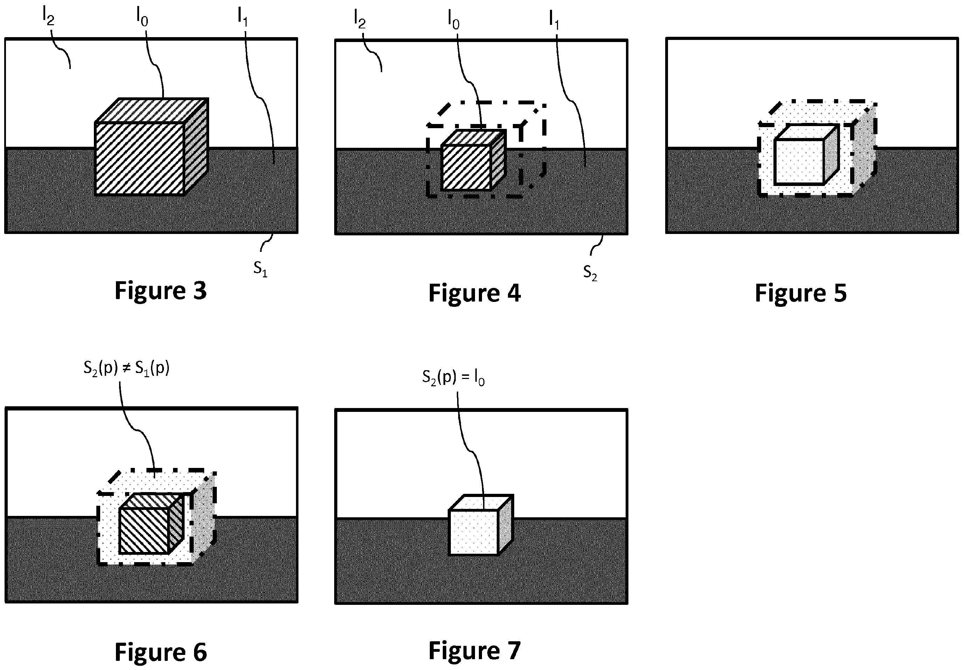

In step 80 (Visible Surface Determination), given the 3D geometry of the real static scene (here a segmented 3D mesh) and the estimated camera pose, a 2D label map $S_1$ of this new frame is obtained, by rendering the scene from the camera point of view and by assigning a different label 1 to each object. **Figure 3** shows the 2D label map $S_1$ for the frame of figure 2 (with effect not applied). The assigned labels are: $l_0$ for the box 10, $l_1$ for the table 11 and $l_2$ for the walls 12. The next steps (81-84) aim at constructing, for each object assigned to label 1 of the real scene, both a confidence map $C_l$ and a texture map $T_l$.

As already mentioned above, in an alternative implementation, we know a priori and reliably the complete texture model of at least one of the objects contained in the real scene (i.e. the model of the real-world 3D scene is partially textured). In this case, no need to process, with the proposed method, the 3D points of this object.

In step 81, for each 3D object of the scene, each 3D point X = (X, Y, Z) belonging to the surface of this 3D object is projected in the frame plane. If the corresponding pixel p in the 2D label map $S_1$ has the label 1 of the considered object (i.e. if $S_1(p) = 1$), it means that the same pixel (i.e. the pixel of same position) of the video frame I has color information that could be further used to construct the object's texture map $T_I$. If more than one 3D point project onto the same pixel p, standard z-buffering approach solves the visibility problem, and the color information of the pixel p of the video frame I will be further used to construct the object's texture map $T_I$ at the uv-texture coordinates of the 3D point the closest to the camera only.

In step 82, if the 3D point is visible in the video frame I, a confidence value c is computed for this 3D point.

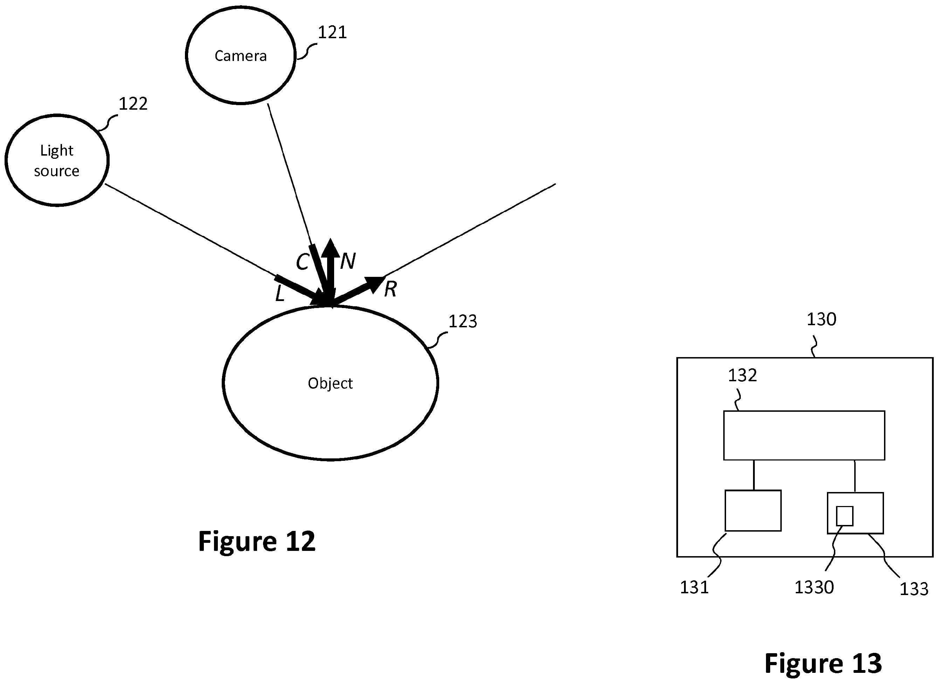

We present now a particular embodiment of step 82 in which the confidence value c is a weighted sum of at least two different terms: $c = \sum_i w_i * c_i$, where $w_i$ is the weight of component $c_i$. The different vectors *N, C, R* and *L* used below are illustrated in **figure 12**, in which are also shown the corresponding elements: a camera 121, a light source 122 and an object 123. In the following description, $\propto$ is the proportionality symbol.

Component $c_1$

For each object, we aim to obtain a high resolution texture map $T_I$. To do so, the closer we observe an object, the better. Thus we define first component $c_1$ as inversely proportional to the Euclidean distance between the object and the camera. Let's note $X = (X_x, X_y, X_z, 1)^T$ the homogeneous coordinates of a point of the 3D object in the object coordinate system (object space), M the object-to-world matrix (model matrix) and V the world-to-view matrix (view matrix). The coordinates $Y = (Y_x, Y_y, Y_z, 1)^T$ of the point in the camera coordinate system (view space or eye space) are given by: Y = V * M * X, and we have:

$$c_1 \propto \frac{1}{\sqrt{Y_x{}^2 + Y_y{}^2 + Y_z{}^2}}.$$

Component $c_2$

Similarly, the more fronto-parallel we observe an object, the less perspective distortions, the better. Thus we define $c_2$ as proportional to the cosine of the angle of incidence (dot product) between the normal vector N (normalized and expressed in view space) of the facet which the considered 3D point belongs to and the vector -C (normalized and expressed in view space) going from the considered 3D point to the 3D point representing the camera location:

$$c_2 \propto \max\big(0, \mathrm{dot}(N, -C)\big).$$

Component $c_3$

Additionally, if we have also an estimation of the pose and of the characteristics of the light sources, such information can be taken into consideration to avoid specularities. Assuming that the scene contains a single spot light (or main light source), we define $c_3$ as proportional to the cosine of the angle (dot product) between the vector C (i.e. inverse of aforesaid vector -C) and the reflected vector R (normalized and expressed in view space and defined from the incident vector L going from a 3D point representing the spot light to the considered 3D point and the normal vector N):

$$c_3 \propto \mathrm{dot}(C, R).$$

Components $c_4$ and $c_5$

Component $c_4$ is defined as a first additional constant if a shadow removal algorithm is applied. Component $c_5$ is defined as a second additional constant if a specularity removal algorithm is applied.

Returning now to figure 8, in step 83, we check if the confidence value c is greater than the corresponding value in the confidence map, i.e. if $c > C_{S1(p)}(q)$, where q states for the uv texture coordinates of the considered 3D point.

In case of affirmative answer in step 83, then in step 84 we refine the texture map ($T_{S1(p)}(q) = I(p)$) and update the confidence map ($C_{S1(p)}(q) = c$).

The above steps 80 to 84, enabling texture map refinement and confidence map update, are performed for every frame, as long as an effect can still be applied (i.e. until the last animation starts for the case of rendering a pre-scenarized animation, or until the application is closed for the case of a game).

In step 85, we assume that a set of effect parameters has not been fixed yet. More precisely, we assume that for each effect, different predefined sets of parameters are available and are ordered by decreasing preference, and steps 86 to 810 are executed to decide with which sets of parameters the effect is applicable. For example, assume we want to apply a translation along x-axis to an object. If the analysis step 89 (see description below) determines that the preferred large translation in the positive direction is not possible, the second option might be to check if the same translation applied in the other direction is possible, and if not, the third option might be to check if a smaller translation is possible, etc. For such an example, we predefine the following sets: (5,0,0), (-5,0,0), (2,0,0), (-2,0,0), (0.5,0,0), (-0.5,0,0). Of course the parameters depend on the sizes of the objects that compose the scene and on their relative locations. Instead of a list of predefined sets, limited ranges with sampling steps may also be considered.

In step 86, we select a first (preferred) set of parameters.

In step 87, we run again step 80 but with the new geometry applied to the real object labeled $I_o$ as if the effect was applied with the selected set of parameters. It results in a second 2D label map $S_2$ for the same video frame. **Figure 4** shows the 2D label map $S_2$ for the frame of figure 2, but with effect applied (reduction of the size of the box).

In step 88, we render a confidence map RC for the same camera pose (view point) as in step 80, but simulating the effect. To do so, we consider the new 3D geometric model corresponding to the scene after simulation of the effect. For each 3D point X = (X, Y, Z) of this 3D geometric model, if X is visible from the current view point (i.e. for the current camera pose), we note:

- p the pixel in the current video frame domain that corresponds to the projection of X;
- q its uv texture coordinates;
- $S_2(p)$ the label of pixel p in the second label map $S_2$ corresponding to the labeling of the current video frame after simulation of the effect;
- $C_l$ the confidence map associated to the object labelled 1 having the same definition domain as the texture map $T_l$.

Thus we build the confidence map RC such that $RC(p) = C_{S_2(p)}(q)$.

In step 89, we analyze the regions of this confidence map RC for which $S_2(p) = l_o$ or $S_2(p) \neq S_1(p)$. For example, we compare the confidence value c of (i.e. associated with) the pixels of these regions (also referred to as "concerned pixels") with a given threshold $\tau$.

In step 810, we take a decision on the applicability of the effect with the selected set of parameters. For example, if all (or most of, e.g. at least 90%) the concerned pixels have a confidence value above the given threshold $\tau$, we decide that the effect is applicable with the selected set of parameters (as detailed below, rare pixels with confidence value under the threshold are possibly spatially inpainted). If not, we return to step 86 in which another set of parameters is selected by browsing linearly the list of predefined sets of parameters ordered by decreasing preference), and steps 87 to 810 are carried out with this new selected set of parameters. In other words, in step 87, we generate a new $S_2$ label map by simulating a variant of the effect with a new selected set of parameters. In another embodiment, the list of the sets of parameters is not browsed linearly but by dichotomy to quickly find a set for which the application of the effect is possible.

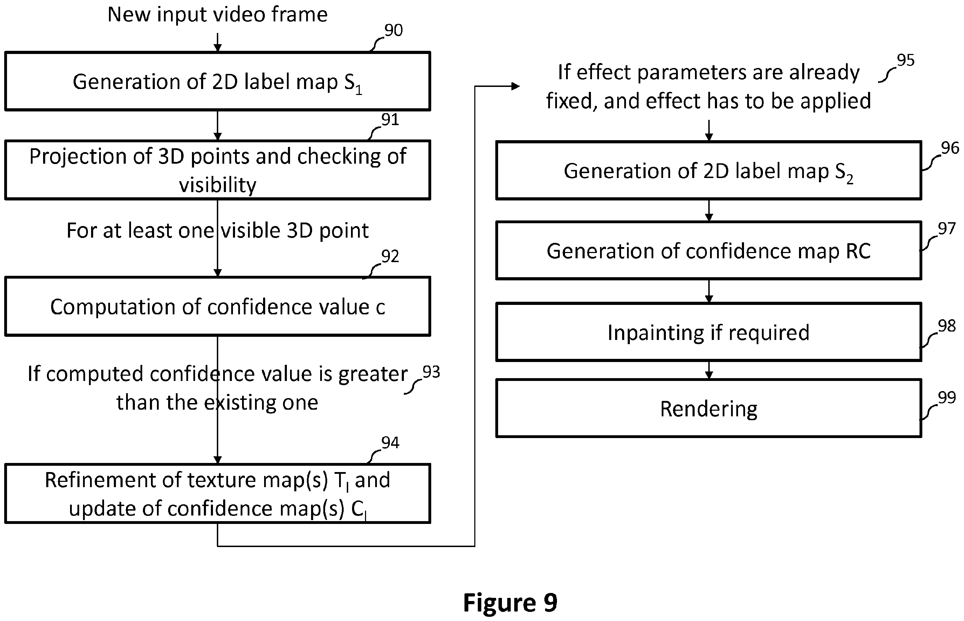

**Figure 9** is a flowchart of a second particular embodiment of the proposed method, for the processing of a new input video frame, in the case the effect parameters are already fixed (see output "yes" of step 810 of figure 8) and effect has to be applied with them.

Steps 90 to 94 are identical to steps 80 to 84 of figure 8.

In step 95, we assume that a set of effect parameters has already been fixed and the effect has to be applied with this set of parameters.

Steps 96 and 97 are identical to steps 87 and 88 of figure 8.

In step 98, if the current confidence map RC still contains concerned pixels p with value below $\tau$ (i.e. if $RC(p) = C_{S_2(p)}(q) < \tau$), then RGB values of the corresponding pixels in the texture map(s) $T_{S_2(p)}(q)$ are reconstructed by spatial inpainting and we set $C_{S_2(p)}(q) = \tau$ so that such inpainted regions can be reused later to render the subsequent frames, which insures the spatio-temporal consistency of the reconstruction, while not preventing a further refinement of the texture map(s) $T_l$ and update of the confidence map(s) $C_l$.

Spatial inpainting is done directly in the "unwrapped" texture map(s). Any existing method can be used (exemplar-based, diffusion-based, ...).

In one embodiment, the target region $\Omega_l$ to be inpainted is $\Omega_l = \{q \mid C_l(q) < \tau\}$, the source region being the complement. In this case, one may avoid to perform the inpainting step after again.

In another embodiment, the target region is restricted to the pixels q corresponding to the 3D points of the object visible after effect application in the frame to be rendered and such that $C_l(q) < \tau$. In this case, the source region is not the complement of the target region and spatial inpainting may be required later again to inpaint other target regions.

In step 99, to render the current video frame with effect applied with the fixed parameters, we need to replace the values of the pixels whose label is not the same before and after application of the effect, as well as pixels whose label after application of the effect is the one of the object directly concerned by the effect. **Figure 5** shows regions with dots which are to be rendered if the effect has to be applied.

Back to the notations, for each pixel p in the current video frame I:

- $S_1(p)$ is the label of p in the first label map $S_1$ corresponding to the labeling of the current video frame before the application of the effect;
- $S_2(p)$ is the label of p in the second label map $S_2$ corresponding to the labeling of the current video frame after simulation of the effect;
- q stands for the uv texture coordinates corresponding to the only 3D point X that projects onto p and that is visible in the current video frame; and
- $T_l$ is the refined texture map associated to the object labeled 1.

Given $l_0$ the label of the object directly concerned by the effect:

- pixels whose label is not the same before and after application of the effect are such that $S_2(p) \neq S_1(p)$. In the example of **Figure 6**, these pixels are contained in regions with dots, corresponding to regions of wall and table that appear when the box is virtually reduced, and which are to be rendered if the effect has to be applied; and

- pixels whose label after application of the effect is the one of the object directly concerned by the effect are such that $S_2(p) = I_o$. In the example of **Figure 7**, these pixels are contained in regions with dots, corresponding to regions of the virtually reduced box, which are to be rendered again if the effect has to be applied.

Thus, to a pixel p of the current video frame I belonging to one of these two sets of pixels, we assign a new value:

$$I(p) = T_{S_2(p)}(q).$$

To render the subsequent frames with effect applied with the same fixed set of parameters: the new 2D label map $S_2$ and the new confidence map RC are generated for the new camera pose with the same fixed set of parameters directly.

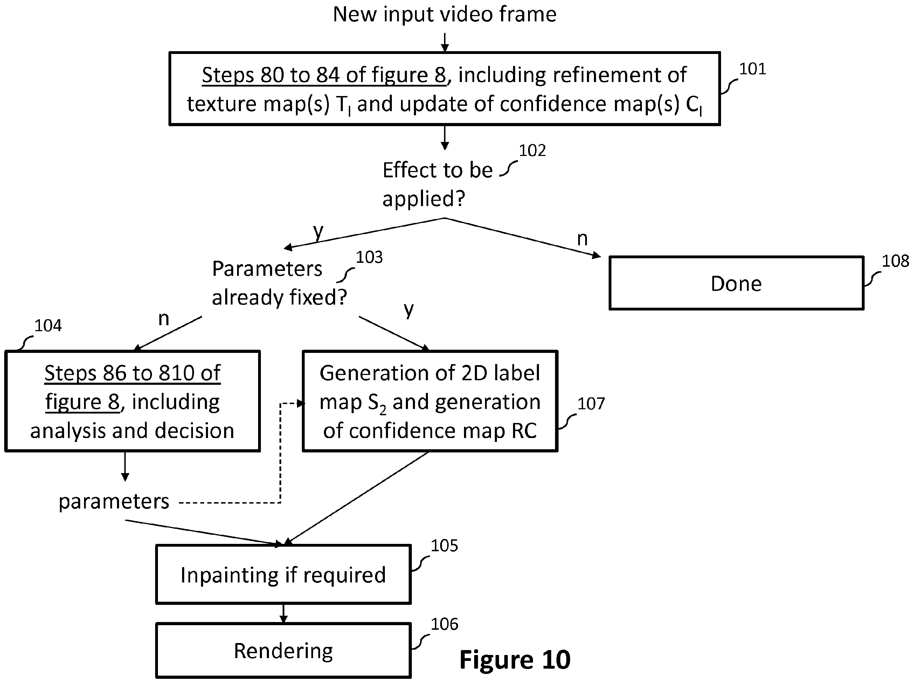

**Figure 10** is a flowchart of a third particular embodiment of the proposed method, for the processing of a new input video frame, in the case of rendering a pre-scenarized animation.

Step 101 comprises sub-steps that are identical to steps 80 to 84 of figure 8.

In step 102, we check if the effect has to be applied. In case of negative answer in step 102, we go to the end step 108. In case of affirmative answer in step 102, we go to step 103 in which we check if the parameters are already fixed.

In case of negative answer in step 103, we go to step 104 comprising sub-steps that are identical to steps 86 to 810 of figure 8. The output of step 104 is a selected set of parameters. Since the animation has to start at a pre-determined instant, the analysis and decision steps 89 and 810 of figure 8 are performed only once, right at this instant.

In case of affirmative answer in step 103, we go to step 107 comprising sub-steps that are identical to steps 87 and 88 of figure 8 (i.e. also steps 96 and 97 of figure 8). In step 107, we use the selected set of parameters outputted by step 104.

After each of step 104 and step 107, we go to steps 105 and 106 that are identical to steps 98 and 99 of figure 9.

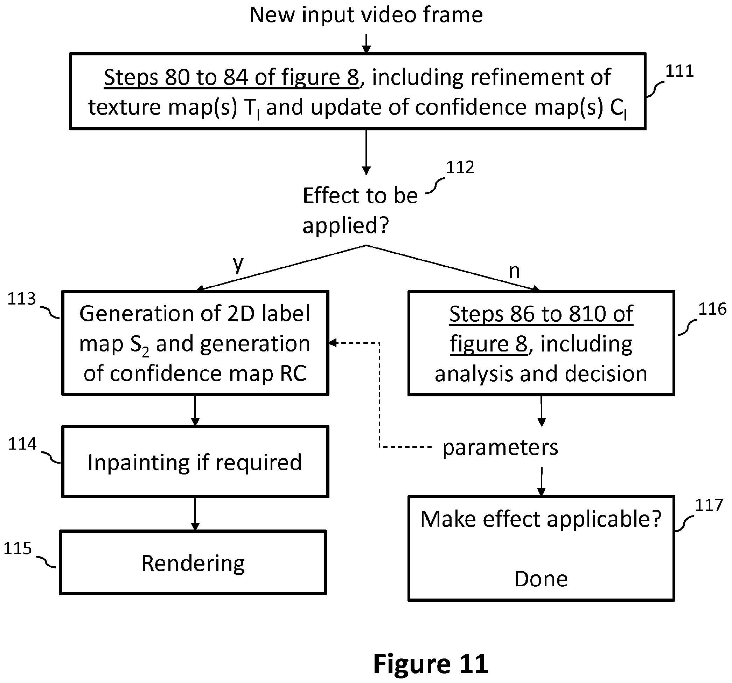

**Figure 11** is a flowchart of a fourth particular embodiment of the proposed method, for the processing of a new input video frame, in the case of a gaming application.

Step 111 comprises sub-steps that are identical to steps 80 to 84 of figure 8.

In step 112, we check if the effect has to be applied. In case of negative answer in step 112, we go to step 116 comprising sub-steps that are identical to steps 86 to 810 of figure 8. The output of step 116 is a selected set of parameters. Then we go to step 117 in which the effect is not rendered but made available to the user through a GUI (Graphical User Interface). While the effect is not applied, the selected set of parameters can be questioned again, i.e. the step 116 (including sub-steps of analysis and decision) are performed on every frame or regularly every N frames. As soon as the user launches the effect, the set of parameters is fixed and the subsequent frames are rendered using this set.

In case of affirmative answer in step 112, we go to step 113 comprising sub-steps that are identical to steps 87 and 88 of figure 8 (i.e. also steps 96 and 97 of figure 8). In step 113, we use the selected set of parameters outputted by step 116. Then we go to steps 105 and 106 that are identical to steps 98 and 99 of figure 9.

**Figure 13** shows the simplified structure of a device 130 according to a particular embodiment. The device 130 comprises a non-volatile memory 133 (e.g. a read-only memory (ROM) or a hard disk), a volatile memory 131 (e.g. a random access memory or RAM) and a processor (computation machine) 132. The non-volatile memory 133 is a non-transitory computer-readable carrier medium. It stores executable program code instructions 1330, which are executed by the processor 132 in order to enable implementation of the method described above, in any of its embodiments (see figures 8 to 11). Upon initialization, the program code instructions 1330 are transferred from the non-volatile memory 133 to the volatile memory 131 so as to be executed by the processor 132. The volatile memory 131 likewise includes registers for storing the variables and parameters required for this execution.

All the steps of the method described above, in any of its embodiments (see figures 8 to 11) can be implemented by the device 130, equally well:

- by the execution of a set of program code instructions executed by a reprogrammable computing machine such as a PC type apparatus, a DSP (digital signal processor) or a microcontroller. This set of program code instructions can be stored in a non-transitory computer-readable carrier medium that is detachable (for example a floppy disk, a CD-ROM or a DVD-ROM) or non-detachable; or

- by a dedicated computing machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it can also be implemented in hardware form, or any form combining a hardware portion and a software portion.

**Claims**

**1.** Method for applying an effect of augmented or mixed reality, said effect having an impact on at least one part of a real-world 3D scene, **characterized in that** it comprises, for each image (20) of a set of at least two images of said scene:

- acquiring said image according to a camera pose;
- for at least one 3D point of said real-world 3D scene:

   ◦ if said 3D point is visible in said image and if said 3D point is not already associated with stored information:

      ▪ determining (80-81) a texture information associated with said 3D point, based on said image;
      ▪ determining (82) a confidence information associated with said texture information, based on said camera pose;
      ▪ storing (82) said texture information and said confidence information, as stored information associated with said 3D point;

   ◦ if said 3D point is visible in said image and if said 3D point is already associated with stored information:

      ▪ determining (80-81) a texture information associated with said 3D point, based on said image;
      ▪ determining (82) a confidence information associated with said texture information, based on said camera pose;
      ▪ comparing (83) said confidence information with a stored confidence information associated with said 3D point;
      ▪ updating (84) the stored confidence information and a stored texture information associated with said 3D point, based on a result of said comparing;

- modifying (85-810) at least one parameter of said effect, based on the stored information associated to each 3D point of said at least one impacted part of said scene.

2. Method according to claim 1, wherein said modifying at least one parameter of said effect comprises:

   a) determining (87) a new geometry of the scene as if said effect was rendered with a first value of said at least one parameter of said effect;
   b) deciding (88-89) on an applicability of said effect with said first value of said at least one parameter, based on stored confidence information associated to the 3D points of said at least one impacted part in the new geometry of the scene; and
   c) if said effect is not applicable with said first value of said at least one parameter, executing again steps a) and b) with another value of said at least one parameter of said effect.

3. Method according to claim 2, wherein said other value of said at least one parameter of said effect is determined from a list of values ordered by decreasing preference and browsed linearly or by dichotomy.

4. Method according to claim 1 or 2, wherein it comprises, for a given image of said set of at least two images of said scene, if said effect has not to be applied:

   - making (117) said effect, with said modified at least one parameter of said effect, available through a user interface.

5. Method according to any one of the claims 1 to 4, wherein it comprises, for a given image of said set of at least two images of said scene, if said effect has to be applied:

   - determining (96-97) a new geometry of the scene with said effect applied with said modified at least one parameter of said effect; and
   - rendering (98-99) said given image, based on the stored texture information associated to the 3D points of said at least one impacted part in the new geometry of the scene.

6. Method according to claim 5, wherein said rendering of said image comprises:

   - for at least one 3D point of said at least one impacted part, in the new geometry of the scene, not associated with a stored confidence information or associated with a stored confidence information corresponding to a value below a determined threshold:

      * reconstructing (98) a texture information for said 3D point, by a spatial inpainting;
      * storing (98) the reconstructed texture information with a confidence information having a value greater or equal to said threshold; and
      * using said reconstructed texture information for said rendering (99) of said image.

7. Method according to any one of the claims 1 to 6, wherein said confidence information is function of a first component $c_1$ defined as inversely proportional to a distance between said 3D point of the scene and a 3D point representing a camera location.

8. Method according to any one of the claims 1 to 7, wherein said confidence information is function of a second component $c_2$ defined as proportional to the cosine of an angle of incidence between:

- a normal vector N of a facet which said 3D point of the scene belongs to, and
- a vector -$C$ going from said 3D point of the scene to said 3D point representing a camera location.

9. Method according to any one of the claims 1 to 8, wherein said confidence information is function of a third component $c_3$ defined as proportional to the cosine of an angle between:

- an inverse of said vector -$C$, and
- a reflected vector $R$, defined from an incident vector $L$, going from a 3D point representing a main light source location to said 3D point of the scene, and from said normal vector $N$.

10. Method according to any one of the claims 1 to 9, wherein said confidence information is function of a fourth component $c_4$ defined as a first additional constant if a shadow removal algorithm is applied.

11. Method according to any one of the claims 1 to 10, wherein said confidence information is function of a fifth component $c_5$ defined as a second additional constant if a specularity removal algorithm is applied.

12. Method according to claims 7 to 11, wherein said confidence information is a weighted sum of at least two of said first, second, third, fourth and fifth components.

13. Computer program product comprising program code instructions (1330) for implementing the method according to any one of the claims 1 to 12, when said program is executed on a computer or a processor (132).

14. Device (14; 130) for applying an effect of augmented or mixed reality, said effect having an impact on at least one part of a real-world 3D scene, said device comprising a computation machine configured to, for each image of a set of at least two images of said scene:

- acquire said image according to a camera pose;
- for at least one 3D point of said real-world 3D scene:

  ◦ if said 3D point is visible in said image and if said 3D point is not already associated with stored information:

  ■ determine a texture information associated with said 3D point, based on said image;
  ■ determine a confidence information associated with said texture information, based on said camera pose;
  ■ store said texture information and said confidence information, as stored information associated with said 3D point;

  ◦ if said 3D point is visible in said image and if said 3D point is already associated with stored information:

  ■ determine a texture information associated with said 3D point, based on said image;
  ■ determine a confidence information associated with said texture information, based on said camera pose;
  ■ compare said confidence information with a stored confidence information associated with said 3D point;
  ■ update the stored confidence information and a stored texture information associated with said 3D point, based on a result of said comparing;

- modify at least one parameter of said effect, based on the stored information associated to each 3D point of said at least one impacted part of said scene.

**Figure 1**

**Figure 2**

EP 3 343 516 A1

**Figure 3**

$I_2$   $I_0$   $I_1$   $S_1$

**Figure 4**

$I_2$   $I_0$   $I_1$   $S_2$

**Figure 5**

$S_2(p) \neq S_1(p)$

**Figure 6**

$S_2(p) = I_0$

**Figure 7**

New input video frame

**Generation of 2D label map $S_1$** — 80

↓

**Projection of 3D points and checking of visibility** — 81

For at least one visible 3D point

**Computation of confidence value c** — 82

If computed confidence value is greater than the existing one — 83

**Refinement of texture map(s) $T_l$ and update of confidence map(s) $C_l$** — 84

If effect parameters are not fixed yet — 85

For each set of parameters browsed in preference decreasing order — 86

**Generation of 2D label map $S_2$** — 87

↓

**Generation of confidence map RC** — 88

↓

**Analysis of confidence map RC** — 89

↓

**Decision on the applicability of the effect with this set of parameters** — 810

no ← → yes

**Figure 8**

New input video frame

```
              ┌──────────────────────────────────────┐ 90
              │   Generation of 2D label map S₁       │
              └──────────────────────────────────────┘
                              │
              ┌──────────────────────────────────────┐ 91
              │ Projection of 3D points and checking of│
              │              visibility               │
              └──────────────────────────────────────┘
```

For at least one visible 3D point

```
              ┌──────────────────────────────────────┐ 92
              │   Computation of confidence value c   │
              └──────────────────────────────────────┘
```

If computed confidence value is greater
than the existing one $\quad$ 93

```
              ┌──────────────────────────────────────┐ 94
              │ Refinement of texture map(s) Tᵢ and   │
              │   update of confidence map(s) Cᵢ      │
              └──────────────────────────────────────┘
```

If effect parameters are already $\quad$ 95
fixed, and effect has to be applied

```
              ┌──────────────────────────────────────┐ 96
              │   Generation of 2D label map S₂       │
              └──────────────────────────────────────┘
                              │
              ┌──────────────────────────────────────┐ 97
              │    Generation of confidence map RC    │
              └──────────────────────────────────────┘
                              │
              ┌──────────────────────────────────────┐ 98
              │        Inpainting if required         │
              └──────────────────────────────────────┘
                              │
              ┌──────────────────────────────────────┐ 99
              │              Rendering                │
              └──────────────────────────────────────┘
```

**Figure 9**

EP 3 343 516 A1

New input video frame

101 — Steps 80 to 84 of figure 8, including refinement of texture map(s) $T_I$ and update of confidence map(s) $C_I$

102 — Effect to be applied?

n → 108 — Done

y → 103 — Parameters already fixed?

n → 104 — Steps 86 to 810 of figure 8, including analysis and decision

y → 107 — Generation of 2D label map $S_2$ and generation of confidence map RC

parameters

105 — Inpainting if required

106 — Rendering

**Figure 10**

New input video frame

Steps 80 to 84 of figure 8, including refinement of texture map(s) $T_l$ and update of confidence map(s) $C_l$ — 111

Effect to be applied? — 112

y

n

113 — Generation of 2D label map $S_2$ and generation of confidence map RC

Steps 86 to 810 of figure 8, including analysis and decision — 116

114 — Inpainting if required

parameters

115 — Rendering

Make effect applicable? — 117

Done

**Figure 11**

EP 3 343 516 A1

**Figure 12**

**Figure 13**

# EP 3 343 516 A1

Europäisches
Patentamt

European
Patent Office

Office européen
des brevets

## EUROPEAN SEARCH REPORT

Application Number

EP 17 30 5003

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TIEFENBACHER PHILIPP ET AL: "Mono camera multi-view diminished reality", 2016 IEEE WINTER CONFERENCE ON APPLICATIONS OF COMPUTER VISION (WACV), IEEE, 7 March 2016 (2016-03-07), pages 1-8, XP032904322, DOI: 10.1109/WACV.2016.7477633 [retrieved on 2016-05-23] | 1,5-14 | INV. G06T19/00 G06T15/04 G06T19/20 |
| A | * abstract * * section 1 "introduction"; page 1, left-hand column - right-hand column * * section 2 "related work"; page 1, right-hand column, paragraph 1 - page 2, right-hand column, paragraph 3 * * section 3 "overview of diminished reality"; page 3, left-hand column - right-hand column * * section 4 "creation of a scene model"; page 3, right-hand column * * section 4.2 "multi-plane inpainting"; page 4, right-hand column * * section 5 "consistency aware key frames"; page 5, left-hand column - right-hand column * * section 5.1 "key frame update steps"; page 5, right-hand column * * section 5.2 "key frames update scheme"; page 5, right-hand column - page 6, left-hand column * * section 7 "Conclusion and outlook"; page 7, right-hand column, paragraphs 3,6 * * figures 1-5,8 * | 2-4 | |

TECHNICAL FIELDS
SEARCHED (IPC)

G06T

-----

-/--

The present search report has been drawn up for all claims

| Place of search | Date of completion of the search | Examiner |
|---|---|---|
| Berlin | 14 July 2017 | Gauthier, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

page 1 of 4

Europäisches
Patentamt

European
Patent Office

Office européen
des brevets

## EUROPEAN SEARCH REPORT

Application Number

EP 17 30 5003

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CRYSTIAN WENDEL M LEÃ GBP O ET AL: "Geometric Modifications Applied to Real Elements in Augmented Reality", VIRTUAL REALITY (SVR), 2011 XIII SYMPOSIUM ON, IEEE, 23 May 2011 (2011-05-23), pages 96-101, XP031894937, DOI: 10.1109/SVR.2011.29 ISBN: 978-1-4577-0661-5 * section III "proposed technique"; page 97, right-hand column, paragraphs 2,4,5 * * section IV.A "tracking"; page 98, right-hand column, paragraph 1 * * Section IV.B "texture mapping"; page 98, right-hand column - page 99, left-hand column * * Section IV.C "inpaint"; page 99, left-hand column, paragraphs 1,2 * * section IV.D "reprojection"; page 99, right-hand column * * section V "results"; page 100, left-hand column, paragraph 2 - right-hand column, paragraph 1 * * figures 4,6,7,8,10,12 * ----- -/-- | 1-14 | |

TECHNICAL FIELDS
SEARCHED (IPC)

The present search report has been drawn up for all claims

| Place of search | Date of completion of the search | Examiner |
|---|---|---|
| Berlin | 14 July 2017 | Gauthier, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

# EUROPEAN SEARCH REPORT

Application Number

EP 17 30 5003

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PARK JUNGSIK ET AL: "[Poster] Interactive deformation of real objects", 2014 IEEE INTERNATIONAL SYMPOSIUM ON MIXED AND AUGMENTED REALITY (ISMAR), IEEE, 10 September 2014 (2014-09-10), pages 295-296, XP032676201, DOI: 10.1109/ISMAR.2014.6948457 [retrieved on 2014-11-05] * section 1 "introduction"; page 295, left-hand column, paragraph 3 - last paragraph * * section 2 "methodology"; page 295, right-hand column * * section 2.1 "3D object tracking"; page 295, right-hand column * * section 2.2 "texture extraction and mapping"; page 295, right-hand column * * section 3 "experimental result"; page 296, left-hand column, paragraphs 2,3 - right-hand column * * figures 1,4 * | 1-14 | |
| A | US 2005/012757 A1 (PARK IN-KYU [KR] ET AL) 20 January 2005 (2005-01-20) * paragraphs [0058], [0065], [0067] * * paragraph [0071] - paragraph [0076] * * paragraph [0085] * | 1,7-14 | TECHNICAL FIELDS SEARCHED (IPC) |
| A | US 2003/001837 A1 (BAUMBERG ADAM MICHAEL [GB]) 2 January 2003 (2003-01-02) * paragraph [0001] - paragraph [0003] * * paragraph [0030] - paragraph [0035] * * paragraphs [0051], [0052] * * paragraph [0056] - paragraph [0062] * * paragraph [0095] - paragraph [0097] * * paragraphs [0101], [0102] * * paragraph [0146] - paragraph [0149] * | 1,7-14 | |

-/--

The present search report has been drawn up for all claims

| Place of search | Date of completion of the search | Examiner |
|---|---|---|
| Berlin | 14 July 2017 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Application Number

EP 17 30 5003

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SIAVASH ZOKAI ET AL: "Multiview Paraperspective Projection Model for Diminished Reality", PROCEEDINGS / THE SECOND IEEE AND ACM INTERNATIONAL SYMPOSIUM ON MIXED AND AUGMENTED REALITY : 7 - 10 OCTOBER 2003, TOKYO, JAPAN, IEEE COMPUTER SOCIETY, LOS ALAMITOS, CALIF. [U.A.], 7 October 2003 (2003-10-07), page 217, XP058187379, ISBN: 978-0-7695-2006-3 * the whole document * | 1,13,14 | |

TECHNICAL FIELDS
SEARCHED     (IPC)

The present search report has been drawn up for all claims

| Place of search | Date of completion of the search | Examiner |
|---|---|---|
| Berlin | 14 July 2017 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 5003

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2017

| Patent document cited in search report | Publication date | Patent family member(s) | Publication date |
|---|---|---|---|
| US 2005012757 A1 | 20-01-2005 | CN 1604142 A | 06-04-2005 |
| | | CN 101025829 A | 29-08-2007 |
| | | CN 101025830 A | 29-08-2007 |
| | | EP 1498850 A2 | 19-01-2005 |
| | | EP 2372662 A2 | 05-10-2011 |
| | | EP 2372663 A2 | 05-10-2011 |
| | | JP 4500614 B2 | 14-07-2010 |
| | | JP 2005038426 A | 10-02-2005 |
| | | KR 20050008242 A | 21-01-2005 |
| | | US 2005012757 A1 | 20-01-2005 |
| US 2003001837 A1 | 02-01-2003 | GB 2377870 A | 22-01-2003 |
| | | JP 2003044870 A | 14-02-2003 |
| | | US 2003001837 A1 | 02-01-2003 |

EPO FORM P0459

For more details about this annex : see Official Journal of the European Patent Office, No. 12/82